# EUROPEAN PATENT SPECIFICATION

(11) **EP 3 773 091 B1**
(45) Date of publication and mention of the grant of the patent: **11.10.2023**
(21) Application number: 19721057.8
(22) Date of filing: 21.03.2019
(51) Int. Cl.: A47J 31/52, A47J 31/44

(54) **METHOD FOR CONTROLLING A BEVERAGE TEMPERATURE IN A DEVICE FOR HEATING AND/OR FROTHING A BEVERAGE**
VERFAHREN ZUM STEUERN EINER GETRÄNKETEMPERATUR IN EINER VORRICHTUNG ZUM ERWÄRMEN UND/ODER AUFSCHÄUMEN EINES GETRÄNKS
PROCÉDÉ DE COMMANDE D'UNE TEMPÉRATURE DE BOISSON DANS UN DISPOSITIF DE CHAUFFAGE ET/OU DE MOUSSAGE D'UNE BOISSON

(30) Priority: 26.03.2018 IT 201800003932
(43) Date of publication of application: 17.02.2021
(73) Proprietor: Rancilio Group S.p.A., 20015 Parabiago (MI) (IT)
(72) Inventor: ZEHNDER, Markus, 20010 Villastanza Di Parabiago (MI) (IT)
(74) Representative: Robba, Pierpaolo
(86) International application number: PCT/IB2019/052311
(87) International publication number: WO 2019/186335

(56) References cited:
- WO-A1-2009/000039
- WO-A1-2010/121299
- ES-A1- 2 247 949
- US-A- 4 962 299

## Description

### Technical Field

The present invention relates to a method for controlling a beverage temperature in a device for heating and/or frothing a beverage.

More particularly, the present invention relates to a method allowing to obtain the desired beverage temperature in an accurate and reliable way.

The present invention can be advantageously used for controlling milk temperature in a device for heating and/or frothing milk.

### Background Art

Devices for heating and/or frothing milk are well known in the art.

More particularly, espresso coffee machines including a device for heating and/or frothing milk are known in the art.

In these devices, heating milk may be obtained by introducing steam into the milk, while frothing of milk may be obtained by introducing a mixture of steam and air into the milk.

The steam is introduced into the milk through a duct which is connected to a steam source, such as a boiler, and is provided with a valve for selectively allowing or preventing steam flow through the duct.

If no air is sucked from the surrounding environment and only steam is introduced into the milk, hot, non-frothed milk is obtained. On the contrary, if some air is sucked from the surrounding environment and mixed with the steam, frothed milk is obtained.

According to a possible arrangement, air flow from the surrounding environment into the steam can be obtained by reducing pressure, for instance by the Venturi effect. According to an alternative possible arrangement air flow from the surrounding environment into the steam can be obtained by pumping air into the steam.

Devices for heating and/or frothing milk in which the valve(s) allowing introduction of steam and/or air into the milk is/are automatically controlled by a control unit are known in the state of the art.

Such a device is disclosed, for instance, in WO 2008/090482 by the same Applicant.

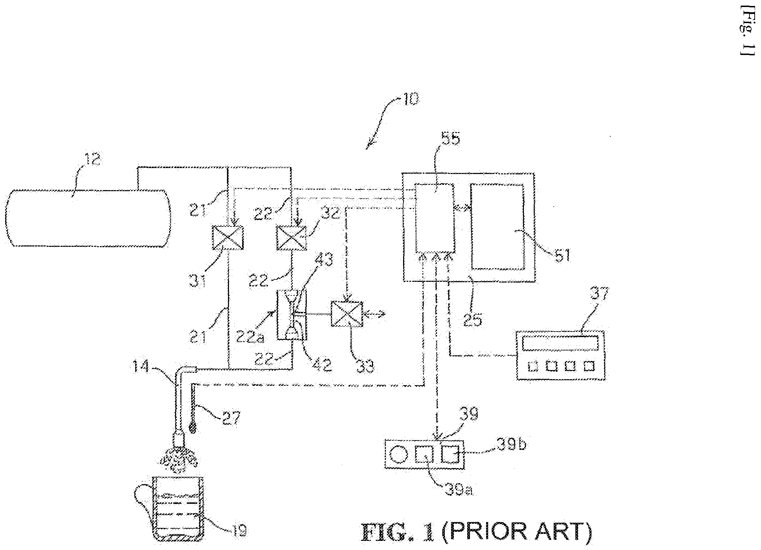

With reference also to Figure 1, the aforesaid device 10 for heating and/or frothing milk 19 includes a first duct 21 and a second duct 22. The ducts 21, 22 have a common inlet, connected to a boiler 12 arranged to generate pressurized steam, and a common outlet, connected to a nozzle 14 arranged to introduce and mix pressurized steam, possibly including air, into the milk 19 contained in a container.

The device 10 also includes a control unit 25 and a input unit 39, connected to the control unit 25 and arranged to transmit inputs from an operator to the control unit for controlling the operation of the device 10.

The first duct 21 comprises a first valve 31, for instance an electrically-actuated valve, the opening and closure of which can be controlled by the control unit 25 in order to enable or prevent flow of pressurized steam from the boiler 12 to the nozzle 14.

The second duct 22, preferably having a diameter equivalent or substantially equivalent to the one of the first duct, comprises a second valve 32, for instance an electrically-actuated valve, the opening and closure of which can be controlled by the control unit 25 in order to enable or prevent flow of pressurized steam from the boiler 12 to the nozzle 14.

This second duct, downstream of the second valve 32, comprises a Venturi element 22a operating by the Venturi effect. The Venturi element 22a comprises a duct section 42, connected to the second duct 22 at both ends, and an orifice 43, formed in the duct section 42 and directly communicating with the surrounding environment.

The orifice 43 may be connected to a further valve, i.e. a Venturi valve 33, the opening and closure of which can be controlled by the control unit 25 in order to enable or prevent introduction of air from the surrounding environment into the Venturi element 22a or, conversely, to enable or prevent outflow of steam through the orifice 43 towards the surrounding environment.

A temperature sensor 27, such as a thermometer, is provided, which is connected to the control unit 25 and is arranged to transmit signals representing the temperature of the milk 19 in which the nozzle 14 is immersed to said control unit 25 for preparing heated and/or frothed milk.

The control unit 25 preferably comprises a microcontroller 51 integrated with or connected to an I/O interface 55, which, in turn, is connected to the first and second valves 31, 32, to the temperature sensor 27, to the input unit 39 and to the Venturi valve 33, if provided.

The input unit 39 is configured to transmit inputs to the control unit 25 for starting and/or stopping the various functions of the device 10. For instance, the input unit 39 may comprise a first key 39a intended to give instructions to the control unit 25 for preparing heated and frothed milk, and a second key 39b correspondingly intended to give instructions to said control unit for preparing heated, non-frothed milk.

The device 10 may preferably be associated to a parameter setting unit 37 connected to the control unit 25 and configured to set operation parameters of the device 10.

In the device 10, opening and closing of the valves 31, 32 and 33 (if provided) are automatically controlled by the control unit 25, according to predetermined programs stored in said control unit and depending on the measurements of the temperature sensor 27.

Accordingly, the quality of the heated and/or frothed milk is no longer dependent on the operator's skills and experience.

However, even such a device comprising a control unit for controlling opening and closing of the valve(s) is not free from drawbacks.

More particularly, if the introduction of steam is stopped when the temperature sensor detects that the beverage (e.g. milk) has reached a set temperature, the actual temperature of the beverage will be higher than the desired value.

The deviation of the temperature from the desired value will depend on the size of the container containing the beverage and on the time constant of the temperature sensor, which will vary according to the constructional and operational features of the sensor itself.

More particularly, the smaller the container containing the beverage is, the more relevant the role of the temperature sensor and its time constant will be.

Overheating of the beverage (e.g. milk) is indicated in several prior documents as a severe drawback, negatively affecting the quality of the heated and/or frothed beverage. In this respect, see for instance EP 1 658 796, WO 2008/049162 or US 5 372 061.

Document ES 2 247 949 discloses a milk heating system in a coffee machine comprising a temperature sensor located in contact with a jug containing the milk (or other liquid) to be heated, and a control unit in connected to a valve for opening / closing the steam outlet of the coffee machine. The control unit may be configured to take a temperature gradient reading to fine-tune the target temperature.

The coffee maker can comprise more than one solenoid valve, for example, in parallel to regulate the steam flow, with simultaneous opening of more or fewer valves.

Document US 4 962 299 discloses a method for control of a heating apparatus in a cooking utensil, in which the temperature is allowed to rise to a value lower than a predetermined maximum temperature, whereupon, after stopping the heating, the temperature is allowed to rise through thermal inertia until the aforesaid maximum temperature is substantially reached, the difference between said maximum temperature and the temperature at which heating is stopped being determined in dependence on the profile of the temperature rise curve during the heating period.

Nevertheless, no prior document deals with the problem of beverage overheating due to the time constant of the temperature sensor in devices for heating and/or frothing a beverage.

Accordingly, the main object of the present invention is to provide a method for controlling a beverage temperature in a device for heating and/or frothing a beverage allowing to accurately and reliably obtain the desired temperature of the beverage and, more particularly, to avoid overheating of said beverage.

This and other objects are achieved by the method for controlling a beverage temperature as claimed in the appended claims.

### Summary of Invention

The Applicant has found out that three different phases can be identified when heating and/or frothing a beverage by introduction of steam:
- in a first phase, immediately after opening of the steam valve, the temperature as a function of time increases as a quadratic function; this means that the second derivative of the function of the temperature over time is constant and greater than zero; more generically, in this first phase, the temperature as a function of time increases as a function, the second derivative of which is greater than zero;
- afterwards, in a second phase, while the steam valve is still kept open, the temperature as a function of time increases as a linear function; this means that the first derivative of the function of the temperature over time is constant and greater than zero and the second derivative of the function of the temperature over time is zero;
- in a third phase, after the steam valve has been closed, the beverage temperature still continues to slowly increase; during this phase the second derivative of the function of the temperature over time is lower than zero.

At the end of the third phase, a final, stable temperature is reached, so that the first derivative of the function of the temperature over time becomes zero.

Accordingly, if the steam valve is closed when the temperature sensor detects that the desired temperature has been reached, the final temperature will be higher than said desired temperature, and the deviation of the temperature from said desired value will depend on the temperature increase during the aforesaid third phase.

The Applicant found out that this deviation depends on the characteristics of the temperature sensor and on the value of the first derivative of the function of the temperature over time in the range in which the temperature is a linear function of time.

Therefore, for a given device - i.e. for a given temperature sensor - the aforesaid deviation substantially only depends on the value of the first derivative of the function of the temperature over time in the range in which the temperature is a linear function of time.

As a result, the method according to the invention substantially comprises the steps of:
- obtaining the value of the first derivative of the function of the temperature over time in the range in which the temperature is a linear function of time;
- calculating the deviation of the final temperature from the desired temperature (i.e. the increase of the temperature after closing the steam valve) as a function of said value;
- setting the closing time of the steam valve by taking into account said deviation, so as to obtain a final temperature that corresponds to the desired, target temperature.

More particularly, the method according to the invention comprises the steps of:
- setting a desired, target temperature of the beverage to be heated and/or frothed;
- opening the steam valve, thus introducing steam into the beverage for heating and/or frothing it;
- sensing the temperature of the beverage by means of a temperature sensor;
- calculating the second derivative of the function of the temperature over time;
- waiting until the second derivative of the function of the temperature over time becomes zero;
- at this stage, calculating the value of the first derivative of the function of the temperature over time;
- calculating the increase of the beverage temperature after the closure of the steam valve as a function of said value;
- setting a switch-off temperature as a difference between the desired, target temperature and said increase of the beverage temperature after closure of the steam valve;
- closing the steam valve when the beverage temperature reaches said switch-off temperature.

If the steam valve is closed when the beverage temperature reaches said switch-off temperature, the beverage temperature will continue to slowly increase, until finally reaching the desired temperature.

In this way, the actual desired temperature can be accurately and reliably obtained and overheating of the beverage can be avoided.

According to a preferred embodiment of the invention, the aforesaid function of the value of the first derivative of the function of the temperature over time is a linear function or - in case it is not a linear function - it is linearized.

According to a preferred embodiment of the invention, the coefficients of said function of the value of the first derivative of the function of the temperature over time are determined through a calibration process.

According to another preferred embodiment of the invention, the coefficients of said function of the value of the first derivative of the function of the temperature over time are determined by starting with predetermined values and adjusting said values iteratively after each heating cycle.

### Brief Description of Drawings

Further features and advantages of the invention will be more evident from the following detailed description of a preferred embodiment, given by way of non-limiting example, with reference to the accompanying drawings, in which:
**Fig.1**
   Figure 1 schematically shows an example of a device for heating and/or frothing a beverage according to prior art.
**Fig.2a**

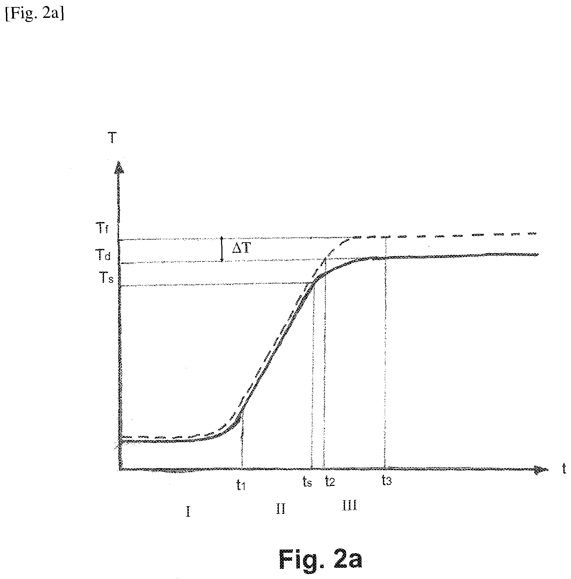

   Figure 2a shows a first curve of the temperature of the beverage as a function of time in a device for heating and/or frothing a beverage when controlled with a traditional method and a second curve of the temperature of the beverage as a function of time in said device when controlled with the method according to the invention.
**Fig.2b**

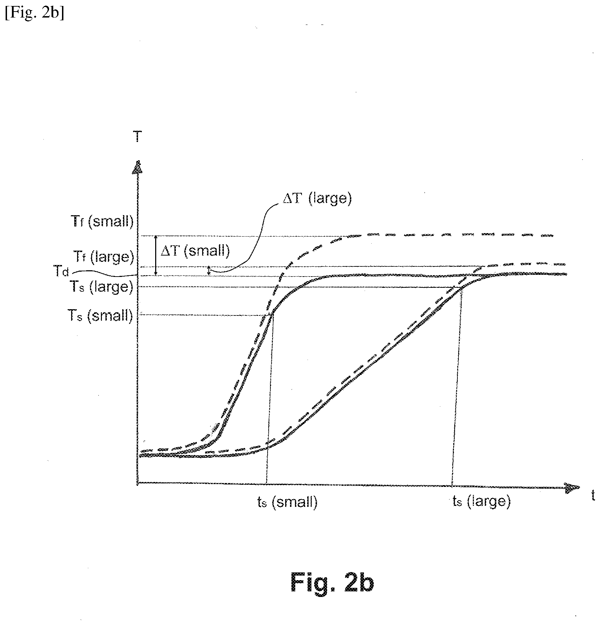

   Figure 2b shows two further first curves and two further second curves similar to those of Figure 2a for different sizes of the container receiving the beverage to be heated and/or frothed.
**Fig.3**

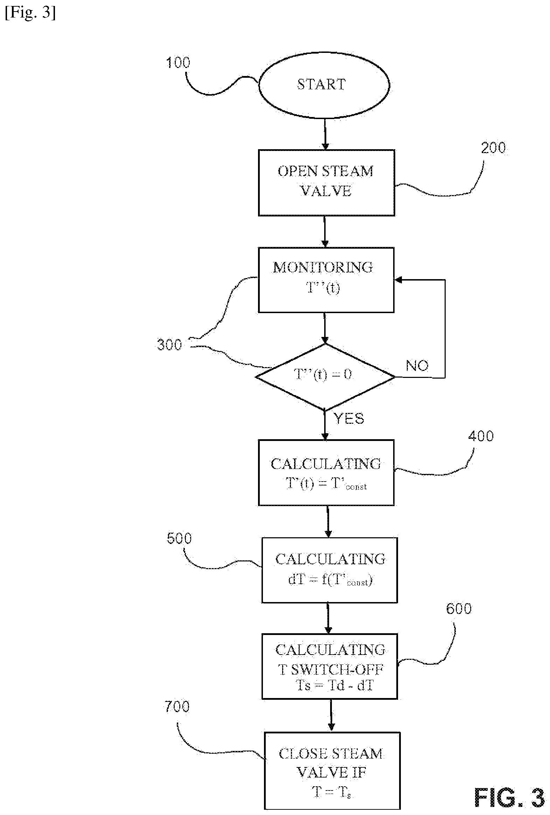

   Figure 3 is a block diagram illustrating the main steps of the method according to the invention.

### Description of Embodiments

In Figure 2a, a first curve in dotted line shows the increase of the temperature of a beverage over time in a device for heating and/or frothing said beverage controlled with a traditional method.

As shown in Figure 1, in said device steam is introduced into said beverage and, to this purpose, comprises a steam duct connected to a steam source and provided with a steam valve which can be selectively opened / closed; the device comprises a temperature sensor and the steam valve is closed when the beverage temperature reaches the desired, target temperature.

It will be evident to the person skilled in the art that in an alternative arrangement the steam duct could be provided with a proportional valve that is controllable for selectively allowing / preventing a flow of steam into the beverage.

At t = 0, the steam valve is opened.

In a first phase (I), between t = 0 and t = t₁, the temperature increases as a quadratic function of time.

In this phase, the second derivative of the function of the temperature over time is constant and greater than zero.

In a second phase (II), between t = t₁ and t = t₂, the temperature increases as a linear function of time.

In this phase, the first derivative of the function of the temperature over time is constant and greater than zero and the second derivative of the function of the temperature over time is zero.

At t = t₂, when the temperature reaches the desired, target value T_{d}, the steam valve is closed.

However, in a third phase following the closure of the steam valve (III), the temperature of the beverage continues to slowly increase.

In this phase, the second derivative of the function of the temperature over time is lower than zero.

At t = t₃ a final, stable temperature Tf is reached.

As clearly shown in Figure 2, this final temperature Tf is higher than the desired, target temperature T_{d}.

This temperature deviation dT = Tf - T_{d} represents an overheating of the beverage, which can involve a severe deterioration of the beverage quality.

The method according to the invention aims at avoiding said overheating and the associated drawbacks.

In this respect, Figure 2 further shows a second curve in solid line showing the increase of the temperature of a beverage over time in the same device for heating and/or frothing said beverage when the method according to the invention is applied.

At t = 0, the steam valve is opened.

Between t = 0 and t = t1, the temperature increases as a quadratic function of time.

Successively, for t > t1, the temperature increases as a linear function of time.

At this stage, the method according to invention provides for calculating the first derivative of the function of the temperature over time T'_{const}, which is constant in this phase, since the temperature increases linearly with time.

The method according to the invention further provides for calculating the deviation of the final, stable value of the temperature from the desired, target value as a function of said first derivative of the function of the temperature over time in the range in which the temperature is a linear function of time, i.e. dT = f(1' canst).

Once said deviation is known, the closure of the steam valve is anticipated so that the final temperature coincides with the desired temperature.

In other words, a switch-off temperature Tₛ = T_{d} - dT is calculated and the steam valve is closed when the temperature sensor detects that the temperature has reached said switch-off temperature Tₛ, at tₛ < t₂.

Once the steam valve has been closed, the temperature continues to slowly increase until finally reaching a final, stable temperature coinciding with the desired, target temperature T_{d} = Tₛ + dT.

Figure 2b shows two further first curves (in dotted lines) and two further second curves (in solid lines) similar to those of Figure 2a for different sizes of the container receiving the beverage to be heated and/or frothed.

More particularly, a first pair of first, dotted-lined curve and second, solid-lined curve refers to a situation in which the beverage is received in a small container, while a second pair of first, dotted-lined curve and second, solid-lined curve refers to a situation in which the beverage is received in a large container.

Figure 2b clearly shows the influence of the container size on the overheating of the beverage: the smaller the container is, the steeper the increase of the temperature will be and the larger the deviation of the final temperature from the desired temperature will be.

In other words, T'_{const} (small) is remarkably greater then T'_{const} (large); moreover, dT (small) = Tt (small) - T_{d} is remarkably greater than dT (large) = Tt (large) - T_{d}.

Accordingly, when using a smaller container the steam valve will have to be closed earlier with respect to the situation in which a larger container is used.

In other words, Tₛ (small) will be remarkably lower that Tₛ (large).

This implies the need for carrying out the necessary calculation for determining the first derivative of the function of the temperature over time in the range in which the temperature increases linearly with time T'_{const} and a switch-off temperature Tₛ very quickly.

This is clearly visible in Figure 2b, in which tₛ (small) is remarkably smaller than tₛ (large).

It is evident from the above that the method according to the invention allows to accurately and reliably control the beverage temperature and to effectively avoid overheating of the beverage.

The main steps of the method according to the invention are summarized here below.

The heating of the beverage is started and the relevant parameters (kind of beverage, size of the container receiving the beverage, desired, target temperature, and the like) are set (step 100).

Then, the steam valve is opened (step 200), thus introducing steam into the beverage.

The temperature of the beverage is continuously detected by a temperature sensor and the second derivative of the function of the temperature over time is monitored until it becomes zero (step 300).

Alternatively, at this step the temperature of the beverage is continuously detected by a temperature sensor and the first derivative of the function of the temperature over time is monitored until it steadily becomes constant.

When said second derivative of the function of the temperature is zero and/or said first derivative of the function of the temperature is constant, the temperature of the beverage is increasing linearly with time.

The temperature of the beverage is continuously detected by a temperature sensor and the first derivative of the function of the temperature over time - which is a constant, positive value T'_{const} - is identified (step 400).

The increase of the beverage temperature after closure of the steam valve dT is then calculated as a function of the aforesaid value of the first derivative of the function of the temperature over time f(T'_{const}) (step 500).

In an embodiment of the invention, said function f(T'_{const}) is a linear function.

In another embodiment of the invention, said function f(T'_{const}) is a non-linear function and the method according to the invention further provides the step of linearizing said function f(T'_{const}).

In an embodiment of the invention, the coefficients of said function f(T'_{const}) are determined once for all through a calibration process at the first operation of the heating and/or frothing device.

In another embodiment of the invention, initial, predetermined values are set for the coefficients of said function f(T'_{const}) and said coefficients are iteratively adjusted at each heating and/or frothing cycle of said beverage.

The optimum switch-off temperature Ts for closing the steam valve in order to obtain the desired temperature T_{d} as final, stable temperature is accordingly calculated as Tₛ = T_{d} - dT (step 600).

Accordingly, the steam valve is closed when the temperature sensor detects that the beverage temperature has reached said optimum switch-off temperature Ts (step 700).

It is to be noted that the beverage temperature is continuously monitored throughout the process. Accordingly, if for any reason the slope of the curve of the temperature as a function of time changes while approaching the desired temperature T_{d}, an updated value of the first derivative of the function of the temperature over time T'_{const} can be identified and an updated switch-off temperature Tₛ can be accordingly calculated.

After the closure of the steam valve, the temperature of the beverage continues to slowly increase until it finally reaches a final, stable temperature coinciding with the desired temperature T_{d}. Therefore, the invention allows to achieve the object set forth above by providing a method capable of accurately and reliably controlling the temperature of a beverage in a heating and/or frothing device.

It will be evident to the person skilled in the art that the description of a preferred embodiment has been given merely by way of example and that several variants and modifications within the reach of the person skilled in the art are possible without departing from the scope of the invention as defined by the appended claims.

More particularly, even if in the above reference has been made to devices for heating and/or frothing milk, the invention is not limited to milk heating and/or frothing and it can also be applied to other beverages.

## Claims

1. Method for controlling the temperature of a beverage in a device for heating and/or frothing said beverage, wherein said beverage is heated and/or frothed by means of introduction of steam into said beverage, said method comprising the steps of:
- starting to introduce steam into said beverage;
- continuously detecting the temperature of said beverage, until the beverage temperature increases linearly with time;
- while the beverage temperature increases linearly with time, continuously detecting said beverage temperature and identifying the first derivative of the function of the temperature over time, said first derivative being a constant, positive value (T'_{const});
- calculating the increase of the beverage temperature after the interruption of the steam introduction (dT) as a function of said value of the first derivative of the function of the temperature over time;
- determining a switch-off temperature (Tₛ) as a difference between a desired, target temperature (T_{d}) and said increase of the beverage temperature after the interruption of the steam introduction (dT);
- interrupting the introduction of the steam into the beverage when the beverage temperature reaches said switch-off temperature (Tₛ), **characterized in that** said step of continuously detecting the temperature of said beverage until the beverage temperature increases linearly with time is carried out by continuously detecting the temperature of said beverage and monitoring the second derivative of the function of the temperature over time until it becomes zero.

2. Method according to claim 1, comprising the steps of:
- placing said beverage in a container;
- providing a device comprising a steam duct, which is connected to a steam source, ends with a nozzle adapted to introduce steam into said container and is provided with a steam valve which can be selectively opened or closed for allowing or, respectively, preventing a steam flow through said nozzle, and further comprising a temperature sensor for detecting the temperature of said beverage in said container;
- opening said steam valve for starting steam introduction into said beverage;
- continuously detecting the temperature of said beverage by means of said temperature sensor, until the beverage temperature increases linearly with time;
- while the beverage temperature increases linearly with time, continuously detecting said beverage temperature by means of said temperature sensor and identifying the first derivative of the function of the temperature over time, said first derivative being a constant, positive value (T'const);
- calculating the increase of the beverage temperature after the closure of the steam valve as a function of said value of the first derivative of the function of the temperature over time (dT);
- determining a switch-off temperature (Tₛ) as a difference between a desired, target temperature (T_{d}) and said increase of the beverage temperature after the closure of the steam valve (dT);
- closing said steam valve when said temperature sensor detects that the beverage temperature has reached said switch-off temperature (Tₛ).

3. Method according to claim 1, comprising the steps of:
- placing said beverage in a container;
- providing a device comprising a steam duct, which is connected to a steam source, ends with a nozzle adapted to introduce steam into said container and is provided with a steam valve which is a proportional valve that is controllable for allowing or, respectively, preventing a steam flow through said nozzle, and further comprising a temperature sensor for detecting the temperature of said beverage in said container;
- controlling said proportional steam valve for allowing steam introduction into said beverage;
- continuously detecting the temperature of said beverage by means of said temperature sensor, until the beverage temperature increases linearly with time;
- while the beverage temperature increases linearly with time, continuously detecting said beverage temperature by means of said temperature sensor and identifying the first derivative of the function of the temperature over time, said first derivative being a constant, positive value (T'const);
- calculating the increase of the beverage temperature after the interruption of steam introduction as a function of said value of the first derivative of the function of the temperature over time (dT);
- determining a switch-off temperature (Tₛ) as a difference between a desired, target temperature (T_{d}) and said increase of the beverage temperature after interruption of steam introduction (dT);
- controlling said proportional steam valve for interrupting steam introduction when said temperature sensor detects that the beverage temperature has reached said switch-off temperature (Tₛ).

4. Method according to any of the claims 1 to 3, wherein said function of said value of the first derivative of the function of the temperature over time is a linear function.

5. Method according to any of the claims 1 to 3, wherein said function of said value of the first derivative of the function of the temperature over time is a non-linear function and wherein said method further comprises the step of linearizing said function of said value of the first derivative of the function of the temperature over time.

6. Method according to any of the claims 1 to 5, wherein the coefficients of said function of said value of the first derivative of the function of the temperature over time are determined through a calibration process.

7. Method according to any of the claims 1 to 5, wherein predetermined values are initially set for the coefficients of said function of said value of the first derivative of the function of the temperature over time and said coefficients are iteratively adjusted at each heating and/or frothing cycle of said beverage.

8. Method according to any of the preceding claims, wherein said beverage is milk.

## Patentansprüche

1. Verfahren zum Steuern der Temperatur eines Getränks in einer Vorrichtung zum Erwärmen und/oder Aufschäumen des Getränks, wobei das Getränk durch Einleiten von Dampf in das Getränk erwärmt und/oder aufgeschäumt wird, wobei das Verfahren die Schritte aufweist:
- Beginnen des Einleitens von dampf in das Getränk,
- fortlaufendes Messen der Temperatur des Getränks, bis die Getränketemperatur linear mit der Zeit ansteigt,
- Während die Getränketemperatur linear mit der Zeit ansteigt, fortlaufendes Detektieren der Getränketemperatur und Identifizieren der ersten Ableitung der Funktion der Temperatur über der Zeit, wobei die erste Ableitung einen konstanten positiven Wert (T'_{const}) hat,
- Berechnen des Anstiegs der Getränketemperatur nach dem Unterbrechen der Einleitung von Dampf (dT) als Funktion des Werts der ersten Ableitung der Funktion der Temperatur über der Zeit,
- Bestimmen einer Abschalttemperatur (T_{S}) als Differenz zwischen einer gewünschten Ziel-Temperatur (T_{d}) und des Anstiegs der Getränketemperatur nach dem Unterbrechen der Dampfeinleitung (dT),
- Unterbrechen der Einleitung von Dampf in das Getränk, wenn die Getränketemperatur die Abschalttemperatur (T_{S}) erreicht,
**dadurch gekennzeichnet, dass** der Schritt des fortlaufenden Messens der Temperatur des Getränks, bis die Getränketemperatur linear mit der Zeit ansteigt, durchgeführt wird, indem fortlaufend die Temperatur des Getränks gemessen und die zweite Ableitung der Funktion der Temperatur über der Zeit überwacht wird, bis sie Null wird.

2. Verfahren nach Anspruch 1, mit den folgenden Schritten:
- Einleiten des Getränks in einen Behälter,
- Bereitstellen einer Vorrichtung, die eine Dampfleitung enthält, die an eine Dampfquelle angeschlossen ist, in einer Düse endet, die dafür ausgelegt ist, Dampf in den Behälter einzuleiten, und mit einem Dampfventil versehen ist, dass selektiv geöffnet oder geschlossen werden kann, um eine Dampfströmung durch die Düse zu ermöglichen beziehungsweise zu verhindern, und zudem einen Temperatursensor zum Messen der Temperatur des Getränks in dem Behälter aufweist,
- Öffnen des Dampfventils zum Starten der Dampfeinleitung in das Getränk,
- Fortlaufendes Detektieren der Temperatur des Getränks mittels des Temperatursensors, bis die Getränketemperatur linear mit der Zeit ansteigt,
- während die Getränketemperatur linear mit der Zeit ansteigt, fortlaufendes Messen der Temperatur des Getränks mittels des Temperatursensors und Ermitteln der ersten Ableitung der Funktion der Temperatur über der Zeit, wobei die erste Ableitung einen konstanten positiven Wert(T'_{const}) hat,
- Berechnen des Anstiegs der Getränketemperatur nach dem Schließen des Dampfventils als Funktion des Wertes der ersten Ableitung und der Funktion der Temperatur über der Zeit (dT),
- Ermitteln einer Abschalttemperatur (Tₛ) als Differenz zwischen einer gewünschten Ziel-Temperatur (T_{d}) und des Anstiegs der Getränketemperatur nach dem Schließen des Dampfventils (dT),
- Schließen des Dampfventils, wenn der Temperatursensor detektiert, dass die Getränketemperatur die Abschalttemperatur (T_{S}) erreicht hat.

3. Verfahren nach Anspruch 1, mit den Schritten:
- Einleiten des Getränks in einen Behälter,
- Bereitstellen einer Vorrichtung, die eine Dampfleitung aufweist, die an eine Dampfquelle angeschlossen ist, in einer Düse endet, die dafür ausgelegt ist, in den Behälter Dampf einzuleiten, und mit einem Dampfventil versehen ist, dass ein Proportional-Ventil ist, das steuerbar ist, um eine Strömung von Dampf durch die Düse zu ermöglichen beziehungsweise zu verhindern, und zudem einen Temperatursensor aufweist, um die Temperatur des Getränks in dem Behälter zu detektieren,
- Steuern des proportionalen Dampfventils, um das Einleiten von Dampf in das Getränk zu ermöglichen,
- fortlaufendes Detektieren der Temperatur des Getränks mittels des Temperatursensors, bis die Getränketemperatur linear mit der Zeit ansteigt,
- während die Getränketemperatur linear mit der Zeit ansteigt, fortlaufendes Messen der Getränketemperatur mittels des Temperatursensors und Ermitteln der ersten Ableitung der Funktion der Temperatur über der Zeit, wobei die erste Ableitung ein konstanter, positiver Wert(T'_{const}) ist,
- Berechnen des Anstiegs der Getränketemperatur nach dem Unterbrechen der Dampfeinleitung als Funktion des Werts der ersten Ableitung der Funktion der Temperatur über der Zeit(dT),
- Bestimmen einer Abschalttemperatur (T_{S}) als Differenz zwischen einer gewünschten Ziel-Temperatur (T_{d}) und des Anstiegs der Getränketemperatur nach dem Unterbrechen der Dampfeinleitung (dT);
- Steuern des proportionalen Dampfventils zum Unterbrechen der Dampfeinleitung, wenn der Temperatursensor detektiert, dass die Getränketemperatur die Abschalttemperatur (T_{S}) erreicht hat.

4. Verfahren nach einem der Ansprüche 1 bis 3, wobei die Funktion des Wertes der ersten Ableitung der Funktion der Temperatur über der Zeit eine lineare Funktion ist.

5. Verfahren nach einem der Ansprüche 1 bis 3, wobei die Funktion des Wertes der ersten Ableitung der Funktion der Temperatur über der Zeit eine nichtlineare Funktion ist und wobei das Verfahren zudem den Schritt der Linearisierung der Funktion des Wertes der ersten Ableitung der Funktion der Temperatur über der Zeit enthält.

6. Verfahren nach einem der Ansprüche 1 bis 5, wobei die Koeffizienten der Funktion des Wertes der ersten Ableitung der Funktion der Temperatur über der Zeit durch ein Kalibrierungsverfahren bestimmt werden.

7. Verfahren nach einem der Ansprüche 1 bis 5, wobei für die Koeffizienten der Funktion des Wertes der ersten Ableitung zunächst vorgegebene Werte verwendet werden und die Koeffizienten iterativ bei jedem Erwärmungs- und/oder Aufschäumzyklus des Getränks angepasst werden.

8. Verfahren nach einem der vorstehenden Ansprüche, wobei das Getränk Milch ist.

## Revendications

1. - Procédé pour réguler la température d'une boisson dans un dispositif pour chauffer et/ou faire mousser ladite boisson, ladite boisson étant chauffée et/ou moussée au moyen de l'introduction de vapeur dans ladite boisson, ledit procédé comprenant les étapes :
- commencer à introduire de la vapeur dans ladite boisson ;
- détecter en continu la température de ladite boisson, jusqu'à ce que la température de boisson augmente linéairement avec le temps
- tandis que la température de boisson augmente linéairement avec le temps, détecter en continu ladite température de boisson et identifier la première dérivée de la fonction de la température au cours du temps, ladite première dérivée étant une valeur positive constante (T'_{const}) ;
- calculer l'augmentation de la température de boisson après l'interruption de l'introduction de vapeur (dT) en tant que fonction de ladite valeur de la première dérivée de la fonction de la température au cours du temps ;
- déterminer une température d'arrêt (Tₛ) en tant que différence entre une température cible souhaitée (T_{d}) et ladite augmentation de la température de boisson après l'interruption de l'introduction de vapeur (dT) ;
- interrompre l'introduction de la vapeur dans la boisson lorsque la température de boisson atteint ladite température d'arrêt (Tₛ),
**caractérisé par le fait que** ladite étape de détection continue de la température de ladite boisson jusqu'à ce que la température de boisson augmente linéairement avec le temps est réalisée en détectant en continu la température de ladite boisson et en surveillant la seconde dérivée de la fonction de la température au cours du temps jusqu'à ce qu'elle devienne nulle.

2. - Procédé selon la revendication 1, comprenant les étapes :
- placer ladite boisson dans un récipient ;
- disposer un dispositif comprenant un conduit de vapeur, qui est relié à une source de vapeur, se termine par une buse agencée pour introduire de la vapeur dans ledit récipient et comporte une vanne de vapeur qui peut être ouverte ou fermée de manière sélective pour permettre ou, respectivement, empêcher un écoulement de vapeur à travers ladite buse, et comprenant en outre un capteur de température pour détecter la température de ladite boisson dans ledit récipient ;
- ouvrir ladite vanne de vapeur pour commencer l'introduction de vapeur dans ladite boisson ;
- détecter en continu la température de ladite boisson au moyen dudit capteur de température, jusqu'à ce que la température de boisson augmente linéairement avec le temps ;
- tandis que la température de boisson augmente linéairement avec le temps, détecter en continu ladite température de boisson au moyen dudit capteur de température et identifier la première dérivée de la fonction de la température au cours du temps, ladite première dérivée étant une valeur positive constante (T'_{const}) ;
- calculer l'augmentation de la température de boisson après la fermeture de la vanne de vapeur en tant que fonction de ladite valeur de la première dérivée de la fonction de la température au cours du temps (dT) ;
- déterminer une température d'arrêt (Tₛ) en tant que différence entre une température cible souhaitée (T_{d}) et ladite augmentation de la température de boisson après la fermeture de la vanne de vapeur (dT) ;
- fermer ladite vanne de vapeur lorsque ledit capteur de température détecte que la température de boisson a atteint ladite température d'arrêt (Tₛ).

3. - Procédé selon la revendication 1, comprenant les étapes :
- placer ladite boisson dans un récipient ;
- disposer un dispositif comprenant un conduit de vapeur, qui est relié à une source de vapeur, se termine par une buse agencée pour introduire de la vapeur dans ledit récipient et comporte une vanne de vapeur qui est une vanne proportionnelle qui est apte à être commandée pour permettre ou, respectivement, empêcher un écoulement de vapeur à travers ladite buse, et comprenant en outre un capteur de température pour détecter la température de ladite boisson dans ledit récipient ;
- commander ladite vanne de vapeur proportionnelle pour permettre l'introduction de vapeur dans ladite boisson ;
- détecter en continu la température de ladite boisson au moyen du capteur de température, jusqu'à ce que la température de boisson augmente linéairement avec le temps ;
- tandis que la température de boisson augmente linéairement avec le temps, détecter en continu ladite température de boisson au moyen dudit capteur de température et identifier la première dérivée de la fonction de la température au cours du temps, ladite première dérivée étant une valeur positive constante (T'_{const}) ;
- calculer l'augmentation de la température de boisson après l'interruption de l'introduction de vapeur en tant que fonction de ladite valeur de la première dérivée de la fonction de la température au cours du temps (dT) ;
- déterminer une température d'arrêt (Tₛ) en tant que différence entre une température cible souhaitée (T_{d}) et ladite augmentation de la température de boisson après l'interruption de l'introduction de vapeur (dT) ;
- commander ladite vanne de vapeur proportionnelle pour interrompre l'introduction de vapeur lorsque ledit capteur de température détecte que la température de boisson a atteint ladite température d'arrêt (Tₛ).

4. - Procédé selon l'une quelconque des revendications 1 à 3, dans lequel ladite fonction de la valeur de la première dérivée de la fonction de la température au cours du temps est une fonction linéaire.

5. - Procédé selon l'une quelconque des revendications 1 à 3, dans lequel ladite fonction de ladite valeur de la première dérivée de la fonction de la température au cours du temps est une fonction non-linéaire et ledit procédé comprenant en outre l'étape de linéarisation de ladite fonction de ladite valeur de la première dérivée de la fonction de la température au cours du temps.

6. - Procédé selon l'une quelconque des revendications 1 à 5, dans lequel les coefficients de ladite fonction de ladite valeur de la première dérivée de la fonction de la température au cours du temps sont déterminés par un traitement d'étalonnage.

7. - Procédé selon l'une quelconque des revendications 1 à 5, dans lequel des valeurs prédéterminées sont initialement définies pour les coefficients de ladite fonction de ladite valeur de la première dérivée de la fonction de la température au cours du temps et lesdits coefficients sont ajustés de manière itérative à chaque cycle de chauffe et/ou de moussage de ladite boisson.

8. - Procédé selon l'une quelconque des revendications précédentes, dans lequel la boisson est du lait.
